# EUROPEAN PATENT APPLICATION

(11) **EP 4 075 583 A1**
(43) Date of publication of application: **19.10.2022**
(21) Application number: 22164703.5
(22) Date of filing: 28.03.2022
(51) Int. Cl.: H01M 50/211, H01M 50/291

(54) **POWER STORAGE DEVICE**

(30) Priority: 31.03.2021 JP 2021060116
(71) Applicant: TOYOTA JIDOSHA KABUSHIKI KAISHA, Toyota-shi, Aichi-ken, 471-8571 (JP)
(72) Inventor: KATO, Masashi, Toyota-shi, 471-8571 (JP); MATSUMOTO, Mizuho, Toyota-shi, 471-8571 (JP); NAKAYAMA, Hiroyuki, Toyota-shi, 471-8571 (JP); MAEDA, Daiki, Toyota-shi, 471-8571 (JP)
(74) Representative: D Young & Co LLP

(57) **Abstract**

A power storage device includes: a power storage module including power storage cells (30, 31, 32); an accommodation case; and a plate portion (28, 29). Each of the power storage cells (30, 31, 32) includes: an exterior body; and an electrode assembly and an electrolyte solution that are accommodated in the exterior body. The plate portion (28, 29) includes a fixed section (84, 85, 115) and a corrugated plate portion (82, 83, 111, 112, 113, 114). In a plan view of the plate portion (28, 29) as seen from a position away from the plate portion (28, 29) in the stacking direction (H), the corrugated plate portion (82, 83, 111, 112, 113, 114) is formed to deform so as to extend toward a central point of the electrode assembly when the corrugated plate portion receives pressing force applied in the stacking direction (H).

## Description

This nonprovisional application is based on Japanese Patent Application No. 2021-060116 filed on March 31, 2021 with the Japan Patent Office, the entire contents of which are hereby incorporated by reference.

### BACKGROUND

### Field

The present disclosure relates to a power storage device.

### Description of the Background Art

There have conventionally been proposed various types of power storage devices each including a power storage module formed by stacking a plurality of power storage cells. A power storage device disclosed in Japanese Patent Laying-Open No. 2013-229266 includes a power storage module, a pair of bus bar modules, and an accommodation case.

The power storage module includes a plurality of power storage cells stacked in the up-down direction. The accommodation case includes side walls disposed on both sides of the power storage module, and end plates disposed on upper and lower surfaces.

Each of the power storage cells includes a laminate film, and an electrode assembly and an electrolyte solution that are accommodated in the laminate film.

### SUMMARY

When charging and discharging are performed in the power storage device configured as described above, the power storage module deforms so as to expand in the up-down direction.

In this case, a large load may be applied to the accommodation case, so that the accommodation case may deform. Further, in the state in which the power storage device is mounted on a vehicle, the power storage device may vibrate due to traveling of the vehicle.

In order to solve the above-described problems, the present inventors have conducted studies about a configuration in which an intervening component such as a corrugated plate is disposed between the power storage module and the accommodation case. The corrugated plate is provided with a plurality of protrusions and recesses each extending from one end to the other end of the corrugated plate.

In the above-described configuration, for example, since the corrugated plate is larger in moment of inertia of area than a flat plate, the corrugated plate is less likely to distort and deform. Thus, even when vibration is applied to the power storage device, significant vibration of the power storage device can be suppressed.

When the corrugated plate receives a load applied in the up-down direction, the corrugated plate deforms such that the protruding height of each protrusion and the recessed height of each recess decrease. Thus, when the power storage module deforms to expand in the up-down direction due to charging and discharging, the protrusions and the recesses in the corrugated plate deform, so that application of a large load to the accommodation case can be suppressed.

However, when the protrusions and recesses deform such that the protruding height of each protrusion and the recessed height of each recess decrease, each protrusion moves while being in contact with the power storage cell. Thereby, in the power storage cell, the electrolyte solution impregnated in the electrode assembly is pushed out of the electrode assembly.

The present disclosure has been made in view of the above-described problems, and an object of the present disclosure is to provide a power storage device that is capable of reducing a load applied from a power storage module to an accommodation case during charging and discharging to thereby suppress vibration of the power storage device and also capable of suppressing pushing-out of an electrolyte solution from an electrode assembly.

A power storage device includes: a power storage module including a plurality of power storage cells stacked in a stacking direction; an accommodation case that accommodates the power storage module; and a plate portion disposed in at least one of: an area between the power storage cells; and an area between the accommodation case and one of the power storage cells. Each of the power storage cells includes: an exterior body; and an electrode assembly and an electrolyte solution that are accommodated in the exterior body. The plate portion includes a fixed section and at least one corrugated plate portion connected to the fixed section. In a plan view of the plate portion as seen from a position away from the plate portion in the stacking direction, the at least one corrugated plate portion is formed to deform so as to extend toward a central point of the electrode assembly when the at least one corrugated plate portion receives pressing force applied in the stacking direction. The at least one corrugated plate portion includes a first corrugated plate portion and a second corrugated plate portion that is disposed opposite to the first corrugated plate portion with respect to a central point of each of the power storage cells.

In a plan view of the at least one corrugated plate portion in which a first direction extends in a direction in which the at least one corrugated plate portion moves toward the central point of the electrode assembly and a second direction intersects with the first direction, the at least one corrugated plate portion is provided with protrusions each extending in the second direction.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a perspective view schematically showing a power storage device 1 and the like according to the present embodiment.
Fig. 2 is a cross-sectional view taken along a line II-II in Fig. 1.
Fig. 3 is a perspective view schematically showing a power storage module 20, plate portions 28, 29, and the like.
Fig. 4 is a perspective view showing a power storage cell 30.
Fig. 5 is a cross-sectional view showing a part of power storage cell 30.
Fig. 6 is a cross-sectional view showing a corrugated plate portion 82.
Fig. 7 is a cross-sectional view showing a flat plate 16 as a reference example.
Fig. 8 is a plan view of plate portion 28 and power storage cell 30 as seen from a position away from plate portion 28 in a stacking direction H.
Fig. 9 is a cross-sectional view showing a power storage device 1A.
Fig. 10 is a plan view showing a plate portion 128 and power storage cell 30.

### DESCRIPTION OF THE PREFERRED EMBODIMENTS

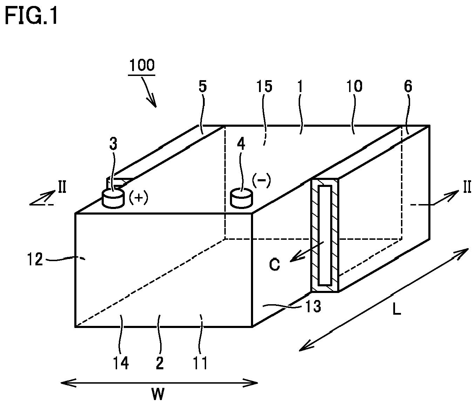

A power storage device according to the present embodiment will be hereinafter described with reference to Figs. 1 to 10. Among the configurations shown in Figs. 1 to 10, the same or substantially the same configurations are denoted by the same reference characters, and the descriptions thereof will not be repeated.

### (First Embodiment)

Fig. 1 is a perspective view schematically showing a power storage device 1 and the like according to the present embodiment. A battery pack 100 includes a power storage device 1 and cooling devices 5 and 6. Power storage device 1 includes an accommodation case 2, a positive electrode external terminal 3, and a negative electrode external terminal 4.

Accommodation case 2 is formed in a substantially rectangular parallelepiped shape. Accommodation case 2 includes a top plate 10, a bottom plate 11, side walls 12 and 13, and end walls 14 and 15. Side walls 12 and 13 are arranged in a width direction W, and formed to extend in a long-side direction L. End walls 14 and 15 are arranged in long-side direction L, and formed to extend in width direction W.

Positive electrode external terminal 3 and negative electrode external terminal 4 are provided on the upper surface of top plate 10. Positive electrode external terminal 3 and negative electrode external terminal 4 are spaced apart from each other in width direction W.

Cooling device 5 is disposed on side wall 12, and cooling device 6 is disposed on side wall 13. A coolant C flows through cooling devices 5 and 6. Fig. 1 shows a partial cross-sectional view of cooling devices 5 and 6, each of which is partially not shown.

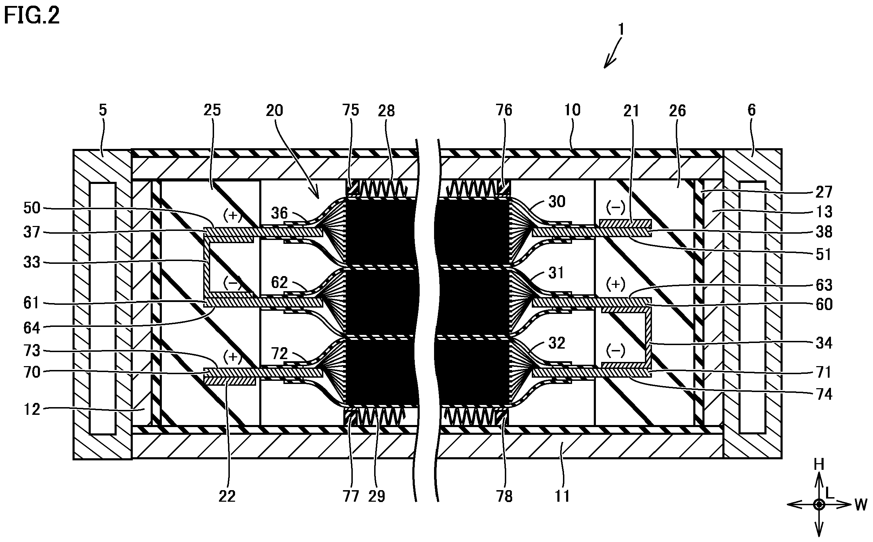

Fig. 2 is a cross-sectional view taken along a line II-II in Fig. 1. Power storage device 1 includes a power storage module 20, bus bars 21 and 22 connected to power storage module 20, insulating members 25 and 26, an insulating film 27, and plate portions 28 and 29.

Plate portion 28 is disposed between power storage module 20 and top plate 10. Plate portion 29 is disposed between power storage module 20 and bottom plate 11.

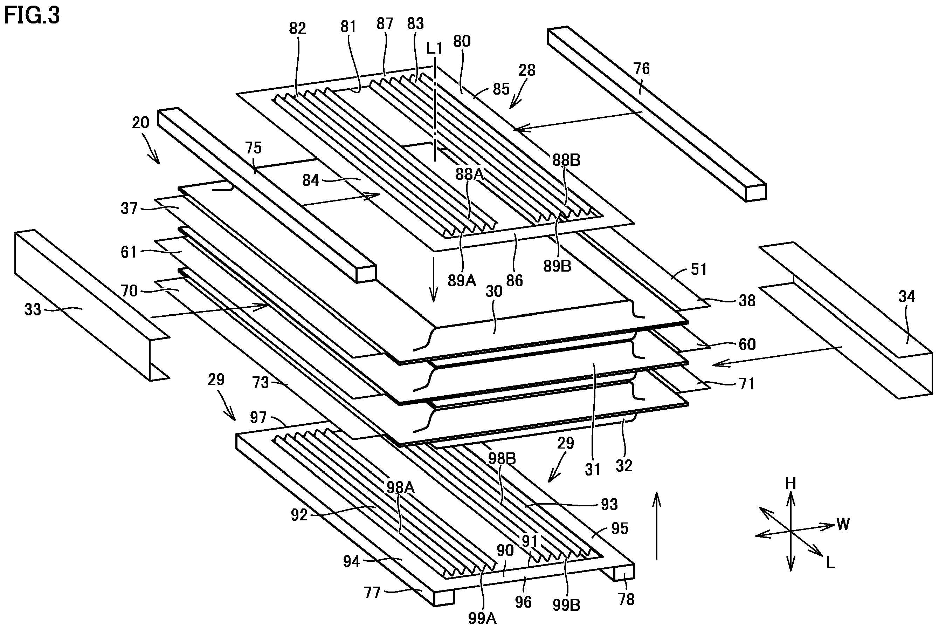

Fig. 3 is a perspective view schematically showing power storage module 20, plate portions 28, 29, and the like. Power storage module 20 includes a plurality of power storage cells 30, 31 and 32 stacked in stacking direction H, and a plurality of connecting members 33 and 34. Long-side direction L intersects with stacking direction H. Width direction W intersects with long-side direction L and also intersects with stacking direction H. Long-side direction L and width direction W are orthogonal to stacking direction H, and long-side direction L is orthogonal to width direction W.

Since power storage cells 31 and 32 have substantially the same configuration as that of power storage cell 30, power storage cell 30 will be hereinafter specifically described.

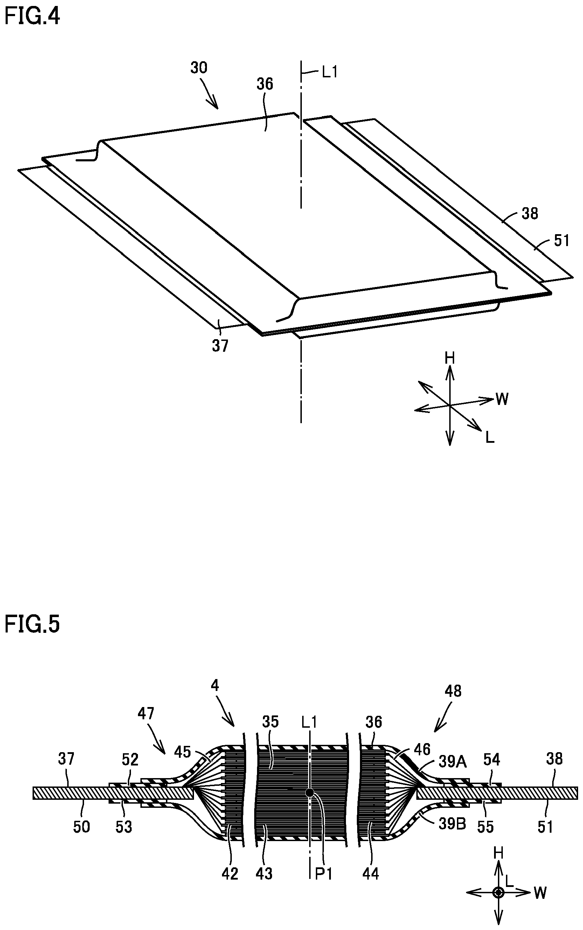

Fig. 4 is a perspective view showing power storage cell 30, and Fig. 5 is a cross-sectional view showing a part of power storage cell 30. Power storage cell 30 includes an electrode assembly 35, an exterior body 36, a positive electrode current collector plate 37, and a negative electrode current collector plate 38.

Exterior body 36 is formed of an aluminum laminate film or the like. Exterior body 36 accommodates electrode assembly 35 and an electrolyte solution (not shown).

Exterior body 36 includes an upper film 39A and a lower film 39B. Upper film 39A is disposed to cover electrode assembly 35 from above while lower film 39B is disposed to cover electrode assembly 35 from below.

Note that the outer peripheral edge of upper film 39A and the outer peripheral edge of lower film 39B are bonded together by an adhesive (not shown).

Electrode assembly 35 is formed in a rectangular parallelepiped shape. Electrode assembly 35 includes a plurality of positive electrode sheets 42, a plurality of separators 43, and a plurality of negative electrode sheets 44 that are stacked in stacking direction H. Separator 43 is disposed between positive electrode sheet 42 and negative electrode sheet 44.

Each positive electrode sheet 42 includes an aluminum foil 45 and a positive electrode composite layer formed on each of the front and rear surfaces of aluminum foil 45. Each negative electrode sheet 44 includes a copper foil 46 and a negative electrode composite layer formed on each of the front and rear surfaces of copper foil 46.

Aluminum foil 45 is provided to extend outside electrode assembly 35 on the side of one side surface 47 of electrode assembly 35, and copper foil 46 is provided to extend outside electrode assembly 35 on the side of the other side surface 48 of electrode assembly 35. Side surfaces 47 and 48 are arranged in width direction W and formed to extend in long-side direction L.

Positive electrode current collector plate 37 is formed of aluminum or the like. Positive electrode current collector plate 37 is disposed on the side surface 47 side, and a plurality of aluminum foils 45 are welded to positive electrode current collector plate 37.

An adhesive 52 is formed on the upper surface of positive electrode current collector plate 37 to bond upper film 39A to positive electrode current collector plate 37. An adhesive 53 is formed on the lower surface of positive electrode current collector plate 37 to bond lower film 39B to positive electrode current collector plate 37. Note that adhesives 52 and 53 extend to the outside of exterior body 36 in width direction W.

Positive electrode current collector plate 37 protrudes on the outside of exterior body 36 and adhesives 52 and 53 in width direction W. Positive electrode current collector plate 37 includes an exposed portion 50 exposed from exterior body 36 and adhesives 52 and 53.

Negative electrode current collector plate 38 is formed of copper or the like. Negative electrode current collector plate 38 is disposed on the side surface 48 side, and a plurality of copper foils 46 are welded to negative electrode current collector plate 38.

An adhesive 54 is formed on the upper surface of negative electrode current collector plate 38 to bond negative electrode current collector plate 38 to upper film 39A. An adhesive 55 is formed on the lower surface of negative electrode current collector plate 38 to bond negative electrode current collector plate 38 to lower film 39B. Note that adhesives 54 and 55 extend to the outside of exterior body 36 in width direction W.

Negative electrode current collector plate 38 protrudes on the outside of exterior body 36 and adhesives 54 and 55 in width direction W. Negative electrode current collector plate 38 includes an exposed portion 51 exposed from exterior body 36 and adhesives 54 and 55.

In Figs. 4 and 5, an imaginary line L1 passes through center P1 of electrode assembly 35 and extends in stacking direction H.

Referring back to Fig. 2, power storage cell 31 includes a positive electrode current collector plate 60, a negative electrode current collector plate 61, and an exterior body 62. An electrode assembly and an electrolyte solution are accommodated in exterior body 62. Like positive electrode current collector plate 37, positive electrode current collector plate 60 includes an exposed portion 63. Like negative electrode current collector plate 38, negative electrode current collector plate 61 includes an exposed portion 64.

Power storage cell 32 includes a positive electrode current collector plate 70, a negative electrode current collector plate 71, and an exterior body 72. An electrode assembly and an electrolyte solution are accommodated in exterior body 72. Like positive electrode current collector plate 37, positive electrode current collector plate 70 includes an exposed portion 73. Like negative electrode current collector plate 38, negative electrode current collector plate 71 includes an exposed portion 74.

Positive electrode current collector plate 37, negative electrode current collector plate 61, and positive electrode current collector plate 70 are arranged in stacking direction H. Negative electrode current collector plate 38, positive electrode current collector plate 60, and negative electrode current collector plate 71 are arranged in stacking direction H.

Connecting member 33 is disposed to connect exposed portion 50 of positive electrode current collector plate 37 and exposed portion 64 of negative electrode current collector plate 61. Connecting member 34 is disposed to connect exposed portion 63 of positive electrode current collector plate 60 and exposed portion 74 of negative electrode current collector plate 71.

Bus bar 21 is welded to the upper surface of exposed portion 51 of negative electrode current collector plate 38. Bus bar 22 is welded to the lower surface of exposed portion 73 of positive electrode current collector plate 70. Bus bar 21 is connected to negative electrode external terminal 4 shown in Fig. 1. Bus bar 22 is connected to positive electrode external terminal 3.

In Fig. 3, plate portion 29 is formed similarly to plate portion 28. Thus, plate portion 28 will be hereinafter mainly described.

Plate portion 28 includes a frame portion 80 and corrugated plate portions 82 and 83. Frame portion 80 provides an opening 81. Frame portion 80 is formed in a rectangular loop shape. Frame portion 80 includes fixed sections 84 and 85 and connecting sections 86 and 87.

Fixed section 84 is disposed on one end side in width direction W and formed to extend in long-side direction L. Fixed section 85 is disposed on the other end side in width direction W and formed to extend in long-side direction L.

Corrugated plate portion 82 is disposed inside opening 81 and connected to fixed section 84. Corrugated plate portion 83 is disposed inside opening 81 and connected to fixed section 85. Corrugated plate portions 82 and 83 are spaced apart from each other in width direction W.

Imaginary line L1 passes between corrugated plate portions 82 and 83. Corrugated plate portions 82 and 83 are disposed with imaginary line L1 interposed therebetween. Corrugated plate portion 83 is disposed on the side opposite to corrugated plate portion 82 with respect to imaginary line L1.

Corrugated plate portion 82 is provided with a plurality of protrusions 88A and a plurality of protrusions 89A. Each of protrusions 88A is formed to protrude toward one side in stacking direction H. Each of protrusions 89A is formed to protrude toward the other side in stacking direction H. In the illustrated example, each protrusion 88A protrudes upward while each protrusion 89A protrudes downward.

Protrusion 88A is formed in a curved surface shape so as to bulge upward. Protrusion 89A is formed in a curved surface shape so as to bulge downward.

Protrusions 88A and 89A each are formed to extend in long-side direction L. Protrusions 88A and protrusions 89A are alternately arranged in width direction W. Protrusions 88A and 89A each are formed to extend from one side to the other side of corrugated plate portion 82 in long-side direction L.

Corrugated plate portion 83 is formed similarly to corrugated plate portion 82. Corrugated plate portion 83 is provided with a plurality of protrusions 88B and a plurality of protrusions 89B each extending in long-side direction L. Each of protrusions 88B protrudes toward one side in stacking direction H. Each of protrusions 89B protrudes toward the other side in stacking direction H. Protrusions 88B and protrusions 89B are alternately arranged in width direction W. Protrusions 88B and 89B each are formed in a curved surface shape.

Power storage device 1 includes a pressing member 75 that presses fixed section 84 against power storage cell 30, and a pressing member 76 that presses fixed section 85 against power storage cell 30. Pressing members 75 and 76 each are formed of an insulating material such as an elastically deformable resin. Pressing member 75 is disposed between top plate 10 of accommodation case 2 and fixed section 84 to press fixed section 84 against the upper surface of power storage cell 30 for fixation. Pressing member 76 is disposed between top plate 10 of accommodation case 2 and fixed section 85 to press fixed section 85 against the upper surface of power storage cell 30 for fixation.

Plate portion 29 includes a frame portion 90 and corrugated plate portions 92 and 93. Frame portion 90 provides an opening 91. Frame portion 90 includes fixed sections 94 and 95 and connecting sections 96 and 97. Power storage device 1 includes a pressing member 77 that presses fixed section 94 against power storage cell 30 for fixation, and a pressing member 78 that presses fixed section 95 against power storage cell 30 for fixation. Pressing members 77 and 78 each are formed of an insulating material such as an elastically deformable resin.

Corrugated plate portion 92 is provided with a plurality of protrusions 98A and a plurality of protrusions 99A each extending in long-side direction L. Protrusions 98A and protrusions 99A are alternately arranged in width direction W. Corrugated plate portion 93 is provided with a plurality of protrusions 98B and a plurality of protrusions 99B each extending in long-side direction L. Protrusions 98B and protrusions 99B are alternately arranged in width direction W.

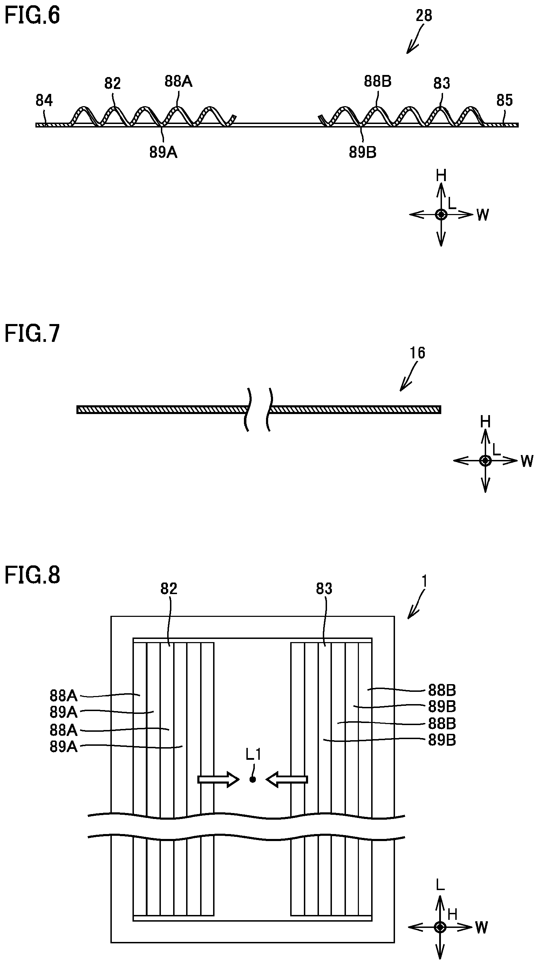

Fig. 6 is a cross-sectional view showing corrugated plate portion 82. Fig. 7 is a cross-sectional view showing a flat plate 16 as a reference example. Flat plate 16 and corrugated plate portion 82 have the same thickness. Flat plate 16 is formed by extending corrugated plate portion 82 in width direction W.

Figs. 6 and 7 each are a cross-sectional view taken along a plane extending in stacking direction H and width direction W. Along the cross section, the moment of inertia of area of corrugated plate portion 82 is defined as a moment of inertia of area I1, and the moment of inertia of area of flat plate 16 is defined as a moment of inertia of area 12. In this case, moment of inertia of area I1 is greater than moment of inertia of area 12.

Thus, for example, it is assumed that a load is applied to one ends of corrugated plate portion 82 and flat plate 16 in long-side direction L in the state where the other ends thereof in long-side direction L are fixed. In this case, corrugated plate portion 82 is less likely to bend and exhibits high rigidity since moment of inertia of area I1 of corrugated plate portion 82 is greater than moment of inertia of area 12 of flat plate 16. Note that corrugated plate portion 83 is formed similarly to corrugated plate portion 82 that has been described above, so that corrugated plate portion 83 is also less likely to bend.

In this way, since corrugated plate portions 82 and 83 are less likely to bend, plate portion 28 is also less likely to bend. Since plate portion 29 is formed similarly to plate portion 28, plate portion 29 is also less likely to bend.

In Fig. 2, since plate portion 29 is formed similarly to plate portion 28, plate portion 29 is also less likely to bend similarly to plate portion 28.

In Fig. 2, insulating member 25 is provided so as to extend from side wall 12 to reach power storage module 20. Exposed portion 50 of positive electrode current collector plate 37, exposed portion 64 of negative electrode current collector plate 61, connecting member 33, and at least a part of bus bar 22 are located inside insulating member 25.

Insulating member 26 is provided so as to extend from side wall 13 to reach power storage module 20. At least a part of bus bar 21, exposed portion 51 of negative electrode current collector plate 38, exposed portion 63 of positive electrode current collector plate 60, and exposed portion 74 of negative electrode current collector plate 71 are located inside insulating member 26.

Battery pack 100 configured as described above is mounted, for example, on an electrically powered vehicle. Due to traveling or the like of a vehicle, vibration may be applied to power storage device 1. On the other hand, since plate portions 28 and 29 are less likely to bend as described above, vibration of power storage device 1 can be suppressed.

Upon charging and discharging of power storage device 1, power storage module 20 deforms so as to expand in stacking direction H. At this time, protrusions 88A and 89A formed in corrugated plate portion 82 and protrusions 88B and 89B formed in corrugated plate portion 83 deform such that their protruding heights decrease.

Similarly, protrusions 98A, 99A, 98B and 99B formed in plate portion 29 also deform such that their protrusion heights decrease.

In this way, even when power storage module 20 deforms so as to expand in stacking direction H, each of the protrusions deforms as described above, so that the load applied to accommodation case 2 can be reduced. Thus, deformation of accommodation case 2 can be suppressed.

Fig. 8 is a plan view of plate portion 28 and power storage cell 30 as seen from a position away from plate portion 28 in stacking direction H.

When protrusions 88A and 89A deform as described above, corrugated plate portion 82 deforms so as to extend, and corrugated plate portion 82 deforms so as to approach imaginary line L1 (the center of electrode assembly 35).

In this case, each protrusion 89A being in contact with the upper surface of power storage cell 30 presses the upper surface of electrode assembly 35 in the state in which exterior body 36 is interposed therebetween. Then, when corrugated plate portion 82 deforms so as to extend toward imaginary line L1, the position of contact between each protrusion 89A and power storage cell 30 also moves toward imaginary line L1. Thereby, the electrolyte solution impregnated in electrode assembly 35 is also pushed back toward the center of electrode assembly 35.

Similarly, corrugated plate portion 83 deforms so as to extend toward imaginary line L1, and thereby, the electrolyte solution inside electrode assembly 35 is also pushed back toward the center of electrode assembly 35.

Thus, the electrolyte solution moves inside electrode assembly 35 from the outer peripheral side to the central side of electrode assembly 35, so that the electrolyte solution can be kept held inside electrode assembly 35.

In general, upon repetition of charging and discharging, electrode assembly 35 repeatedly expands in stacking direction H and returns to its original thickness. Thereby, the electrolyte solution inside electrode assembly 35 may leak out from the outer peripheral surface of electrode assembly 35. On the other hand, in power storage device 1, the electrolyte solution that has moved to the outer peripheral side of electrode assembly 35 can be returned to the central side, so that the electrolyte solution can be kept held inside electrode assembly 35.

Referring back to Fig. 2, plate portion 29 is configured similarly to plate portion 28. Thus, as power storage module 20 deforms to expand, the electrolyte solution inside the electrode assembly in power storage cell 32 can be pushed back toward the center of the electrode assembly.

During charging and discharging of power storage device 1, the temperature of power storage module 20 rises. At this time, insulating member 25 is formed so as to cover exposed portions 50, 64, and 73, connecting member 33, and at least a part of bus bar 22. Since exposed portions 50, 64, 73, connecting member 33, and bus bar 22 each are formed of a metal material, the heat in power storage module 20 is excellently transmitted to insulating member 25 for dissipation. The heat transmitted to insulating member 25 is transmitted through side wall 12 to cooling device 5 for dissipation.

Insulating member 26 is formed so as to cover at least a part of bus bar 21, exposed portions 51, 63, 74, and connecting member 34. Since bus bar 21, exposed portions 51, 63, 74, and connecting member 34 each are formed of a metal material, the heat in power storage module 20 is excellently transmitted to insulating member 26 for dissipation. The heat transmitted to insulating member 26 is transmitted through side wall 13 to cooling device 6 for dissipation. Thus, power storage module 20 can be excellently cooled.

### (Second Embodiment)

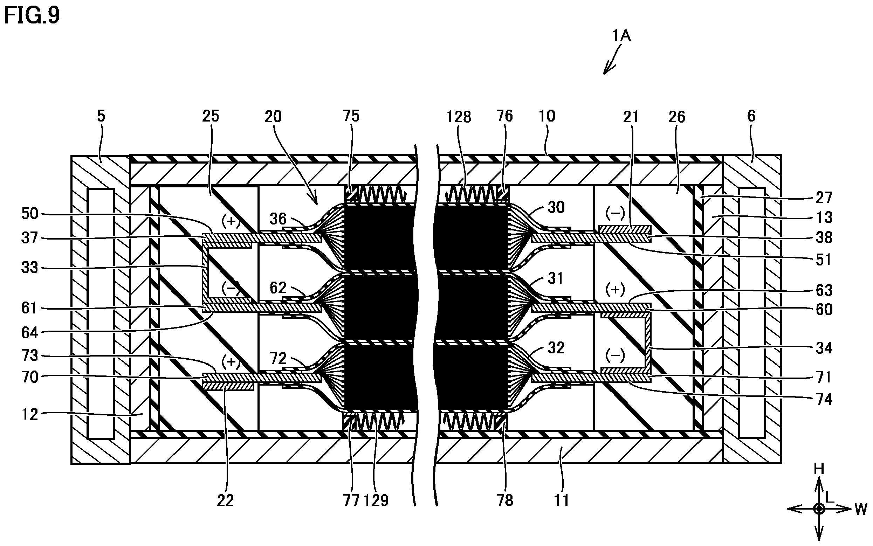

Referring to Fig. 9 and the like, a power storage device 1A will be hereinafter described. Power storage device 1A has substantially the same configuration as that of power storage device 1 except for the configurations of plate portions 128 and 129. Fig. 9 is a cross-sectional view showing power storage device 1A. Plate portion 128 is disposed between power storage cell 30 and top plate 10, and plate portion 129 is disposed between power storage cell 32 and bottom plate 11.

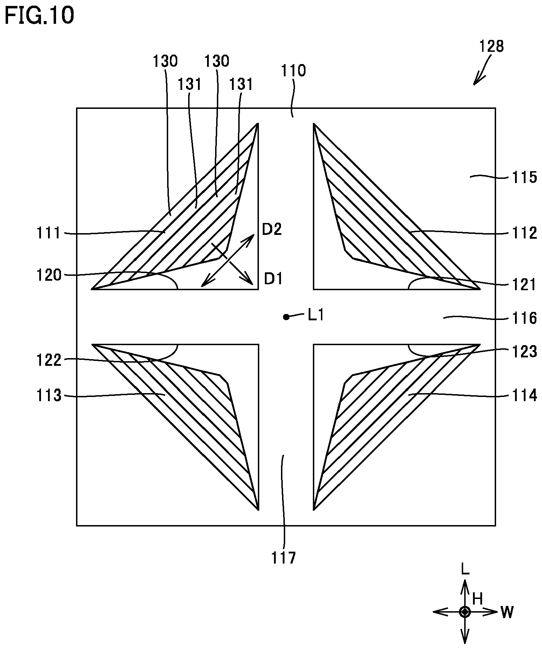

Fig. 10 is a plan view showing plate portion 128 and power storage cell 30. Plate portion 128 includes a frame portion 110 and corrugated plate portions 111, 112, 113, 114.

Frame portion 110 has a fixed section 115 formed in a rectangular loop shape and a plurality of connecting sections 116 and 117. Frame portion 110 is provided with a plurality of openings 120, 121, 122, and 123.

Each of corrugated plate portions 111, 112, 113, and 114 is connected to frame portion 110. Corrugated plate portions 111, 112, 113, and 114 are arranged so as to surround imaginary line L1. Corrugated plate portions 111 and 112 are spaced apart from each other, and imaginary line L1 is located between corrugated plate portions 111 and 112. Similarly, corrugated plate portions 113 and 114 are spaced apart from each other, and imaginary line L1 is located between corrugated plate portions 113 and 114.

In this case, the direction extending from corrugated plate portion 111 toward imaginary line L1 is defined as a direction D1, and the direction orthogonal to direction D1 and stacking direction H is defined as a direction D2. Direction D1 is also orthogonal to stacking direction H.

Corrugated plate portion 111 is formed such that its width decreases toward imaginary line L1. Corrugated plate portion 111 is provided with a plurality of protrusions 130 and a plurality of protrusions 131. Each of protrusions 130 is formed so as to protrude toward one side in stacking direction H, specifically, so as to protrude upward. Each of protrusions 131 is formed so as to protrude downward.

Protrusions 130 and 131 each are formed to extend in direction D2. Protrusions 130 and protrusions 131 are alternately arranged in direction D1. Note that corrugated plate portions 112, 113, and 114 each are formed similarly to corrugated plate portion 111.

In other words, protrusions protruding upward and protrusions protruding downward are alternately formed also in each of corrugated plate portions 112, 113, and 114. Each of corrugated plate portions 111, 112, 113, and 114 is provided with a plurality of protrusions, and therefore, is less likely to bend. Thus, significant deformation of power storage device 1A that occurs due to vibration applied to power storage device 1A can be suppressed.

Further, when power storage module 20 deforms so as to expand in stacking direction H due to charging and discharging, protrusions 130 and 131 in corrugated plate portion 111 deform such that their protruding heights decrease. Accordingly, corrugated plate portion 111 deforms to extend toward imaginary line L1. Similarly, corrugated plate portions 112, 113, and 114 also deform to extend toward imaginary line L1.

Thereby, in the electrode assembly inside power storage cell 30, the electrolyte solution can be pushed back toward the center of the electrode assembly.

Note that plate portion 129 is formed similarly to plate portion 128. Thereby, significant vibration of power storage device 1A that occurs due to vibration applied to power storage device 1A can be suppressed. Further, the electrolyte solution in the electrode assembly inside power storage cell 32 can be pushed back toward the center of the electrode assembly.

In the above description about the example in each of the first and second embodiments, a plate portion is disposed between power storage module 20 and accommodation case 2, but the plate portion may be disposed between power storage cells 30 and 31 and between power storage cells 31 and 32.

Although the present disclosure has been described and illustrated in detail, it is clearly understood that the same is by way of illustration and example only and is not to be taken by way of limitation, the scope of the present disclosure being interpreted by the terms of the appended claims.

## Claims

1. A power storage device comprising:
a power storage module (20) including a plurality of power storage cells (30, 31, 32) stacked in a stacking direction (H);
an accommodation case (2) that accommodates the power storage module (20); and
a plate portion (28, 29, 128) disposed in at least one of
an area between the power storage cells (30), and
an area between the accommodation case (2) and one of the power storage cells (30), wherein
each of the power storage cells (30) includes
an exterior body (36), and
an electrode assembly (35) and an electrolyte solution that are accommodated in the exterior body (36),
the plate portion (28, 29, 128) includes
a fixed section (84, 85, 115), and
at least one corrugated plate portion (82, 83, 111, 112, 113, 114) connected to the fixed section (84, 85, 115), and
in a plan view of the plate portion (28, 29, 128) as seen from a position away from the plate portion (28, 29, 128) in the stacking direction (H), the at least one corrugated plate portion (82, 83, 111, 112, 113, 114) is formed to deform so as to extend toward a central point of the electrode assembly (35) when the at least one corrugated plate portion (82, 83, 111, 112, 113, 114) receives pressing force applied in the stacking direction (H).

2. The power storage device according to claim 1, wherein
the at least one corrugated plate portion includes
a first corrugated plate portion (82), and
a second corrugated plate portion (83) disposed opposite to the first corrugated plate portion (82) with respect to a central point of each of the power storage cells (30).

3. The power storage device according to claim 1 or 2, wherein
in a plan view of the at least one corrugated plate portion in which a first direction extends in a direction in which the at least one corrugated plate portion moves toward the central point of the electrode assembly (35) and a second direction intersects with the first direction,
the at least one corrugated plate portion is provided with protrusions each extending in the second direction.
